# EUROPEAN PATENT SPECIFICATION

(11) **EP 4 156 931 B1**
(45) Date of publication and mention of the grant of the patent: **26.06.2024**
(21) Application number: 21727470.3
(22) Date of filing: 20.05.2021
(51) Int. Cl.: A01N 37/42, A01N 25/04, A01N 25/30, A01P 21/00

(54) **NEW TRINEXAPAC-ETHYL MICROEMULSION COMPOSITIONS**
NEUE TRINEXAPAC-ETHYL-MIKROEMULSIONSZUSAMMENSETZUNGEN
NOUVELLES COMPOSITIONS DE MICROÉMULSION DE TRINEXAPAC-ÉTHYLE

(30) Priority: 28.05.2020 EP 20177038
(43) Date of publication of application: 05.04.2023
(73) Proprietor: Syngenta Crop Protection AG, 4058 Basel (CH)
(72) Inventor: SOLANKI, Rina, Bracknell Berkshire RG42 6EY (GB); BROQUET, Jean-Charles, Bracknell Berkshire RG42 6EY (GB)
(74) Representative: SYNGENTA IP
(86) International application number: PCT/EP2021/063557
(87) International publication number: WO 2021/239591

(56) References cited:
- WO-A1-98/00009
- WO-A2-2011/063948
- CN-A- 105 454 271

## Description

### Technical Field

The present invention relates to a new trinexapac-ethyl microemulsion composition. Such compositions are useful in agriculture for regulating the growth of plants.

### Background

Trinexapac-ethyl has the following chemical formula:

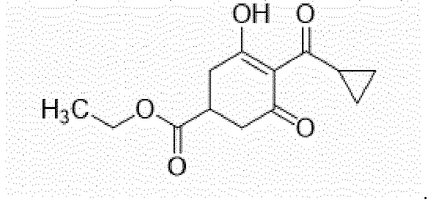

Trinexapac-ethyl is a systemic plant growth regulator and retardant, which is absorbed by foliage, translocated acropetally and basipetally in the phloem and xylem to the growing shoots. Trinexapac-ethyl reduces stem growth by inhibition of internode elongation. Trinexapac-ethyl is particularly applied in cereals such as wheat and barley.

CN 105 454 271 describes a herbidical composition containing triflusulfuron-methyl and trinexapac-ethyl for the treatment of surgarcane fields.

WO 98/00009 describes a pesticidal composition of butanole-ethoxylate/propoxylate-blockcopolymer, a branched alcohol ethoxylate and tristyrenephenol-ethoxylate surfactants.

WO 2011/063948 describes a method of regulating dicotylendous plants with trinexapac-ethyl and prohexadione-calcium.

Trinexapac-ethyl is preferably formulated as a microemulsion (ME) formulation Microemulsions are usually diluted with a big excess of water, i.e. a so-called tank mix is prepared, before being applied by the farmer on the field. However, many microemulsions often have technical drawbacks when being diluted in tanks such as the formation of sediments or the formation of bigger oil droplets via coalescence. There is therefore a continued need to provide improved microemulsion formulations which exhibit better physical stability. Furthermore, the chemical stability of trinexapac-ethyl, i.e. the so-called shelf life, in formulations is often not as desired. It is the aim of this invention to provide a trinexapac-ethyl microemulsion without these drawbacks.

### Description of the embodiments

Thus, in a first aspect of the invention, as embodiment 1, there is provided a microemulsion composition comprising
(i) trinexapac-ethyl, and
(ii) a poly(ethylene oxide)-poly(propylene oxide)-poly(ethylene oxide) block copolymer,
wherein the average molecular weight of the polypropylene oxide) block of the block copolymer molecule is in the range of 1450 to 3000 gram/mol, and the weight percentage of the polyethylene oxide) block as part of the entire block copolymer molecule is in the range of 20 and 50%.

One of the crucial properties of a formulation such as the composition according to embodiment 1 is its long term stability. The temperatures during transportation of said formulations may vary dramatically, e.g. from -20°C to 50°C. Any form of instability within the formulation may have a severe impact on the active ingredient present in the formulation and the applications and treatments possible. It has been found that surprisingly only combinations of trinexapac-ethyl with very specific surfactants can form a physically and chemically stable trinexapac-ethyl microemulsion with acceptable water dilution properties.

The stability of concentrated microemulsions upon dilution with water is of particular importance as such concentrates are first diluted with many times the amount of water before use. It has been surprisingly found that microemulsions according to embodiment 1 retain their properties as microemulsions even upon dilution with many times the amount of water which is not the case for microemulsions with other types of surfactants.

As embodiment 2, there is provided a microemulsion composition according to embodiment 1 wherein the average molecular weight of the polypropylene oxide) block of the block copolymer molecule is in the range of 1700 to 2800 gram/mol, and the weight percentage of the polyethylene oxide) block as part of the entire block copolymer molecule is in the range of 30 and 45%.

As embodiment 3, there is provided a microemulsion composition according to embodiment 1 or 2 wherein the average molecular weight of the polypropylene oxide) block of the block copolymer molecule is in the range of 2000 to 2800 gram/mol, and the weight percentage of the poly(ethylene oxide) block as part of the entire block copolymer molecule is in the range of 35 and 45%.

As embodiment 4, there is provided a microemulsion composition according to any one of embodiments 1 to 3 wherein the concentration of the poly(ethylene oxide)-polypropylene oxide)-poly(ethylene oxide) block copolymer in the microemulsion composition is between 50 and 125 gram/liter.

As embodiment 5, there is provided a microemulsion composition according to any one of embodiments 1 to 4 wherein the concentration of the poly(ethylene oxide)-polypropylene oxide)-poly(ethylene oxide) block copolymer is between 75 and 100 gram/liter.

As embodiment 6, there is provided a microemulsion composition according to any one of embodiments 1 to 5 wherein the concentration of trinexapac-ethyl is between 200 and 400 gram/liter.

As embodiment 7, there is provided a microemulsion composition according to any one of embodiments 1 to 6, wherein the concentration of trinexapac-ethyl is between 225 and 300 gram/liter.

As embodiment 8, there is provided a microemulsion composition according to any one of embodiments 1 to 7, wherein the composition further comprises surfactants selected from castor oil alkoxylates.

In particular, as embodiment 9, there is provided a microemulsion composition according to any one of embodiments 1 to 8 wherein the composition further comprises 400 to 600 gram/liter of a water-miscible solvent.

In particular, as embodiment 10, there is provided a microemulsion composition according to any one of embodiments 1 to 9 wherein the water-miscible solvent is selected from an amyl alcohol, or a mixture thereof. As used herein, an "amyl alcohol" is any of 8 alcohols with the formula C5H12O. A suitable product is sold under the tradename PENTANOL 45^{®}.

Block copolymers of ethylene oxide and propylene oxide can be di- and tri-block copolymers, such as ABA or BAB block copolymer or BA block copolymers. Examples include the GENAPOL^{®} PF series (CLARIANT), the PLURONIC^{®} series (BASF), the SYNPERONIC^{®} PE series (CRODA), or the TOXIMUL^{®} series (STEPAN). The group of ethylene oxide/propylene oxide block copolymers for use in the microemulsion compositions of embodiment 1 are polyethylene oxide)-poly(propylene oxide)-poly(ethylene oxide) block copolymer with an average molecular weight of the polypropylene oxide) block in the range of 1450 to 3000 gram/mol, and the weight percentage of the polyethylene oxide) block as part of the entire block copolymer molecule is in the range of 20 and 50%. Preferred block copolymers are tri-block copolymers with ABA. Examples suitable for use in a microemulsion according to embodiment 1 include but are not limited to the products sold under the tradenames Pluronic^{®} PE6200, Pluronic^{®} PE6400, Pluronic^{®} P84 and Pluronic^{®} PE9400.

A skilled person is aware that Pluronic^{®} polyethylene oxide)-poly(propylene oxide)-poly(ethylene oxide) block copolymers are characterized by the average molecular weight of the polypropylene oxide) block of the block copolymer molecule and the percentage of poly(ethylene oxide) block of the entire copolymer in the so-called "Pluronic grid" (P. Bahadur and G. Riess, *Tenside Surf. Det.,* 28, 1991, 173). The Pluronic grid ranges from 950 to 4000 gram/mol average molecular weight of the polypropylene oxide) block and from 10 to 80% weight percentage of the poly(ethylene oxide) block. As mentioned above, it has surprisingly found that only a very small selection of poly(ethylene oxide)-polypropylene oxide)-poly(ethylene oxide) block copolymers can provide a physically and chemically stable microemulsion formulation of trinexapac-ethyl.

As embodiment 11, there is provided a microemulsion composition according to any one of embodiments 1 to 10, further comprising an alkylbenzene sulfonate. In particular, as embodiment 12, there is provided a microemulsion composition according to embodiment 11, wherein the alkylbenzene sulfonate is a dodecyl-benzene sulfonate, more particularly a calcium dodecyl-benzene sulfonate. As embodiment 13, the microemulsion composition comprises from 5 to 15 gram/liter alkylbenzene sulfonate. A suitable product is sold under the tradename PHENYLSULFONATE 2842^{®}.

As embodiment 14, there is provided a microemulsion composition according to any one of embodiments 1 to 13, further comprising an antifoam emulsion, in particular a silicon antifoam emulsion. As embodiment 15, the microemulsion composition comprises from 5 to 15 gram/liter of an antifoam emulsion. A suitable product is sold under the tradename SAG 1572^{®}.

The microemulsion compositions according to any one of embodiment 1 to 15 are useful in regulating the growth of plants which comprises applying to a plant, a composition according to any one of embodiments 1 to 15. In particular, the microemulsion compositions of the invention are suitable in regulating the growth of cereal plants, in particular wheat and barley.

### Experimental:

Comparison of different types of surfactants as emulsifiers in trinexapac-ethyl microemulsions:
(i) The composition of the formulations tested:

| **Component** | **gram / liter** |
|---|---|
| Trinexapac-ethyl | 250 |
| Emulsifier E1* | 80 |
| Condensation product of castor oil and ethylene oxide | 10 |
| Dodecyl-benzene sulfonic acid calcium salt linear | 10 |
| Antifoam | 0.1 |
| Water | 75 |
| Pentanol mixture of isomers | Up to 1 liter |
| TOTAL | 1 liter |

| | |
|---|---|
| *A wide variation of surfactants was tested for technical suitability (see under point (ii)). | |

(ii) Results of the testing of the formulations according to (i) where E1 refers to the emulsifier E1 in (i):

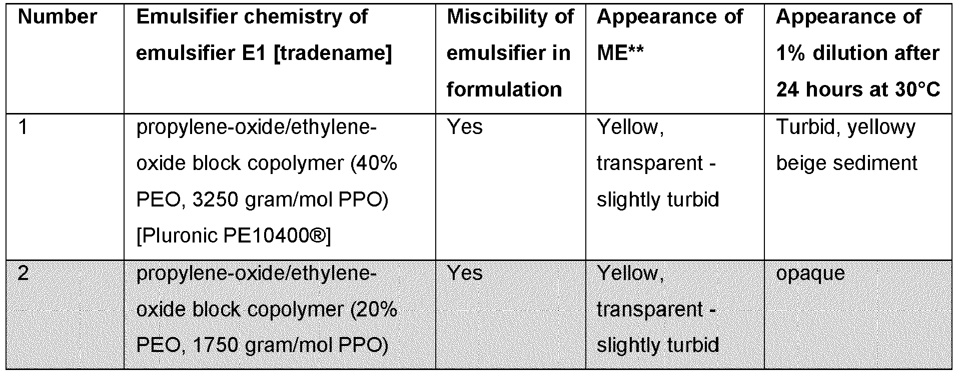

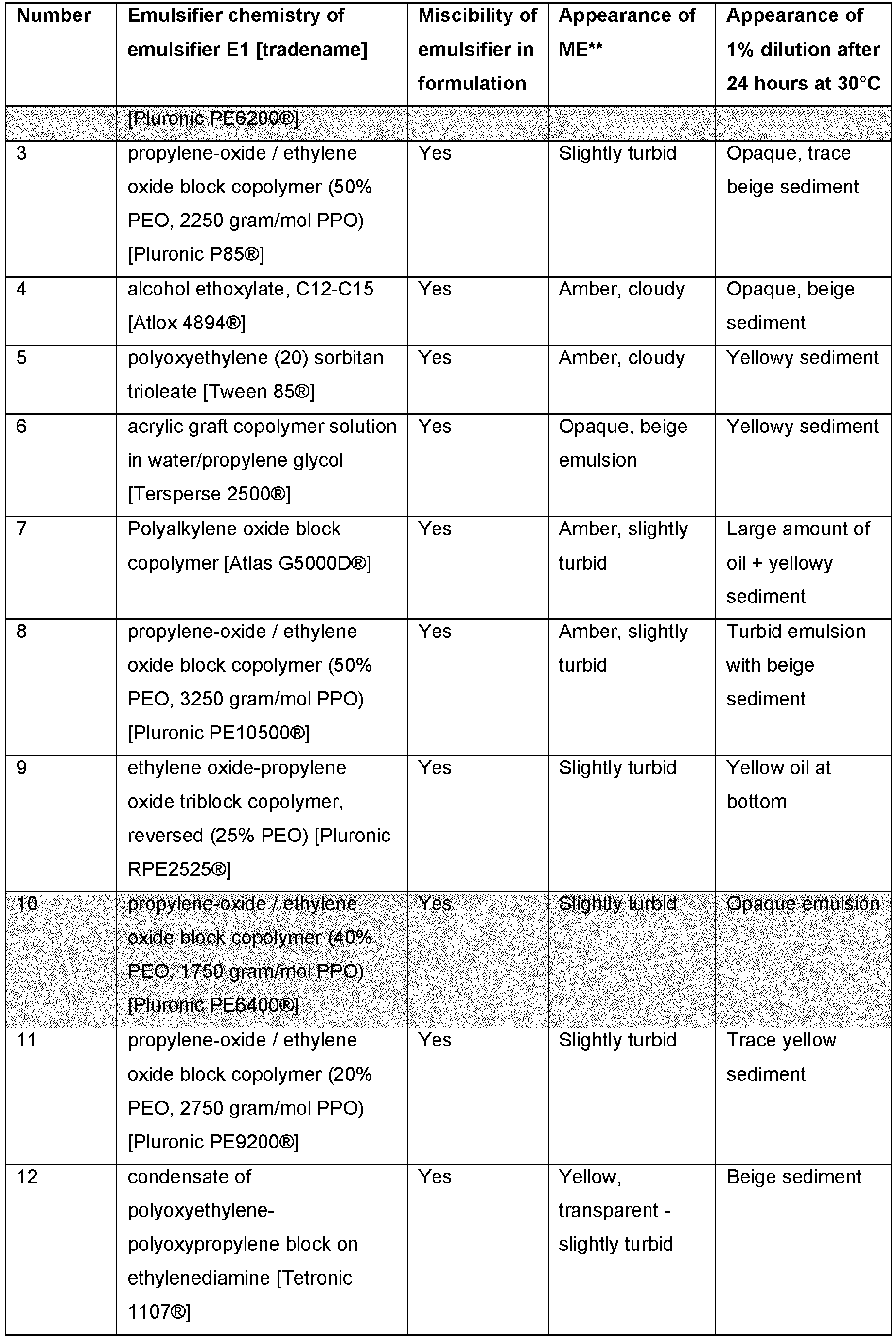

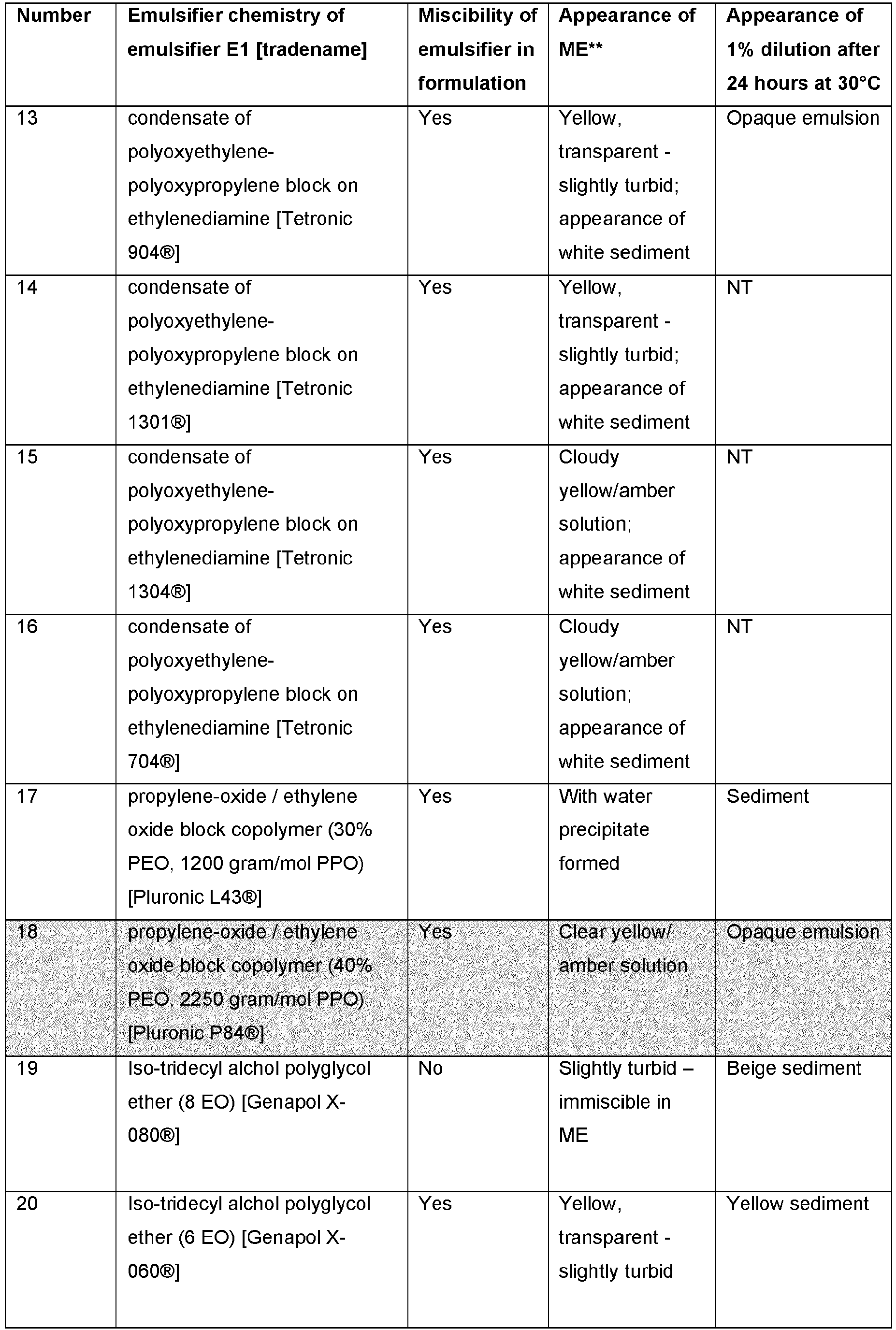

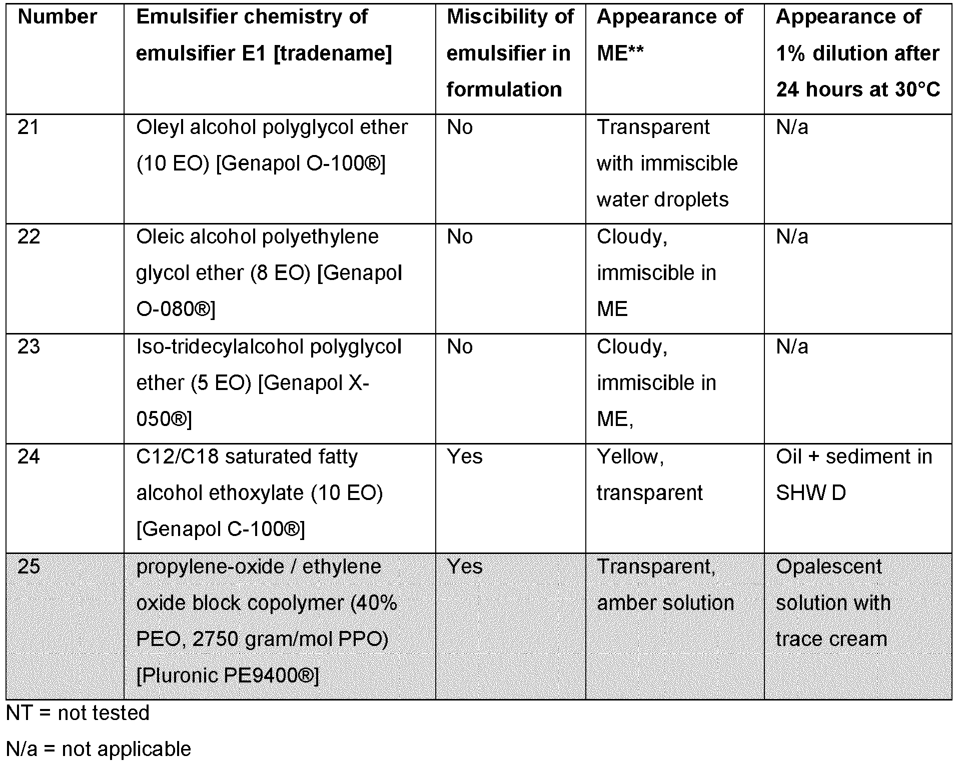

The shaded formulations represent emulsifier chemistries within the scope of the invention.

One can see that surprisingly only very specific types of emulsifiers are suitable to provide microemulsion compositions which are technically suitable for real-life applications. In particular, some emulsifiers proved to be immiscible with the microemulsions. For example, from the GENAPOL^{®} series, only Genapol C-100^{®} was miscible (formulation 24). However, Genapol C-100^{®} exhibited sedimentation upon dilution with water. Also emulsifiers from the TETRONIC^{®} series proved unacceptable.

(iii) Chemical stability of the active ingredient trinexapac-ethyl:
The chemical stability of trinexapac-ethyl in microemulsion compositions having different emulsifiers E1 was tested over 12 weeks at temperatures -18 and 40°C. The following emulsifiers E1 were used in formulations according to (i) (except that no antifoam was used for some of them) for chemical stability:
a) Propylene-oxide/ethylene-oxide block copolymer (20% PEO, 1750 gram/mol PPO) [Pluronic PE6200^{®}];
b) Propylene-oxide/ethylene-oxide block copolymer (40% PEO, 1750 gram/mol PPO) [Synperonic PE/L64^{®}];
c) Propylene-oxide / ethylene oxide block copolymer (40% PEO, 2250 gram/mol PPO) [Pluronic P84^{®}]
d) Propylene-oxide / ethylene oxide block copolymer (40% PEO, 2750 gram/mol PPO) [Pluronic PE9400^{®}]

| Formulation | Percentage of trinexapac-ethyl loss after 12 weeks at 40°C vs. -18°C |
|---|---|
| according to (i) (except that no antifoam was used) with emulsifier a) | 7.6% |
| according to (i) (except that no antifoam was used) with emulsifier b) | 7.1% |
| according to (i) (except that no antifoam was used) with emulsifier c) | 4.0% |
| according to (i) with emulsifier c) | 4.6% |
| according to (i) with emulsifier d) | 4.8% |

| | |
|---|---|
| Only the formulations with emulsifier c) and d) exhibited an acceptable chemical stability profile. This means that only formulations using emulsifiers c) and d) provide an acceptable shelf life for a commercial formulation. | |

## Claims

1. A microemulsion composition comprising
(i) trinexapac-ethyl, and
(ii) a poly(ethylene oxide)-poly(propylene oxide)-poly(ethylene oxide) block copolymer,
wherein the average molecular weight of the polypropylene oxide) block of the block copolymer molecule is in the range of 1450 to 3000 gram/mol, and the weight percentage of the poly(ethylene oxide) block as part of the entire block copolymer molecule is in the range of 20 and 50%.

2. The microemulsion composition according to claim 1, wherein
the average molecular weight of the polypropylene oxide) block of the block copolymer molecule is in the range of 1700 to 2800 gram/mol, and the weight percentage of the poly(ethylene oxide) block as part of the entire block copolymer molecule is in the range of 30 and 45%.

3. The microemulsion composition according to claim 1, wherein
the average molecular weight of the polypropylene oxide) block of the block copolymer molecule is in the range of 2000 to 2800 gram/mol, and the weight percentage of the poly(ethylene oxide) block as part of the entire block copolymer molecule is in the range of 35 and 45%.

4. The microemulsion composition according to any one of claims 1 to 3, wherein
the concentration of the poly(ethylene oxide)-polypropylene oxide)-poly(ethylene oxide) block copolymer in the emulsion composition is between 50 and 125 gram/liter.

5. The microemulsion composition according to claim 4, wherein
the concentration of the poly(ethylene oxide)-polypropylene oxide)-poly(ethylene oxide) block copolymer is between 75 and 100 gram/liter.

6. The microemulsion composition according to any one of claims 1 to 5, wherein
the concentration of trinexapac-ethyl is between 200 and 400 gram/liter.

7. The microemulsion composition according to claim 6, wherein
the concentration of trinexapac-ethyl is between 225 and 300 gram/liter.

8. The microemulsion composition according to any one of claims 1 to 7, wherein the composition further comprises surfactants selected from castor oil alkoxylates.

9. The microemulsion composition according to any one of claims 1 to 8, wherein the composition further comprises 400 to 600 gram/liter of a water-miscible solvent.

10. The microemulsion composition according to claim 9, wherein the water-miscible solvent is selected from an amyl alcohol, or a mixture thereof.

11. A method of regulating the growth of plants which comprises applying to a plant a composition according to any one of claims 1 to 10.

12. The method according to claim 11, wherein the plant is selected from cereals.

13. The method according to claim 11, wherein the plant is wheat or barley.

## Patentansprüche

1. Mikroemulsionszusammensetzung, umfassend
(i) Trinexapac-ethyl und
(ii) ein Poly(ethylenoxid)-poly(propylenoxid)-poly(ethylenoxid)-Blockcopolymer, wobei das mittlere Molekulargewicht des Poly(propylenoxid)-Blocks des Blockcopolymermoleküls im Bereich von 1450 bis 3000 Gramm/mol liegt und der Gewichtsprozentanteil des Poly(ethylenoxid)-Blocks als Teil des gesamten Blockcopolymermoleküls im Bereich von 20 und 50 ö liegt.

2. Mikroemulsionszusammensetzung nach Anspruch 1, wobei
das mittlere Molekulargewicht des Poly(propylenoxid)-Blocks des Blockcopolymermoleküls im Bereich von 1700 bis 2800 Gramm/mol liegt und der Gewichtsprozentanteil des Poly(ethylenoxid)-Blocks als Teil des gesamten Blockcopolymermoleküls im Bereich von 30 und 45 ö liegt.

3. Mikroemulsionszusammensetzung nach Anspruch 1, wobei
das mittlere Molekulargewicht des Poly(propylenoxid)-Blocks des Blockcopolymermoleküls im Bereich von 2000 bis 2800 Gramm/mol liegt und der Gewichtsprozentanteil des Poly(ethylenoxid)-Blocks als Teil des gesamten Blockcopolymermoleküls im Bereich von 35 und 45 ö liegt.

4. Mikroemulsionszusammensetzung nach einem der Ansprüche 1 bis 3, wobei
die Konzentration des Poly(ethylenoxid)-poly(propylenoxid)-poly(ethylenoxid)-Blockcopolymers in der Emulsionszusammensetzung zwischen 50 und 125 Gramm/Liter liegt.

5. Mikroemulsionszusammensetzung nach Anspruch 4, wobei
die Konzentration des Poly(ethylenoxid)-poly(propylenoxid)-poly(ethylenoxid)-Blockcopolymers zwischen 75 und 100 Gramm/Liter liegt.

6. Mikroemulsionszusammensetzung nach einem der Ansprüche 1 bis 5, wobei
die Konzentration von Trinexapac-ethyl zwischen 200 und 400 Gramm/Liter liegt.

7. Mikroemulsionszusammensetzung nach Anspruch 6, wobei
die Konzentration von Trinexapac-ethyl zwischen 225 und 300 Gramm/Liter liegt.

8. Mikroemulsionszusammensetzung nach einem der Ansprüche 1 bis 7, wobei die Zusammensetzung ferner aus Ricinusölalkoxylaten ausgewählte Tenside umfasst.

9. Mikroemulsionszusammensetzung nach einem der Ansprüche 1 bis 8, wobei die Zusammensetzung ferner 400 bis 600 Gramm/Liter eines mit Wasser mischbaren Lösungsmittels umfasst.

10. Mikroemulsionszusammensetzung nach Anspruch 9, wobei das mit Wasser mischbare Lösungsmittel aus Amylalkohol oder einer Mischung davon ausgewählt ist.

11. Verfahren zur Regulierung des Wachstums von Pflanzen, bei dem man eine Zusammensetzung nach einem der Ansprüche 1 bis 10 auf eine Pflanze aufbringt.

12. Verfahren nach Anspruch 11, wobei die Pflanze aus Getreide ausgewählt ist.

13. Verfahren nach Anspruch 11, wobei es sich bei der Pflanze um Weizen oder Gerste handelt.

## Revendications

1. Composition de microémulsion comprenant
(i) du trinéxapac-éthyle, et
(ii) un copolymère à blocs de poly(oxyde d'éthylène)-poly(oxyde de propylène)-poly(oxyde d'éthylène),
le poids moléculaire moyen du bloc de poly(oxyde de propylène) de la molécule de copolymère à blocs étant dans la plage de 1 450 à 3 000 grammes/mole, et le pourcentage en poids du bloc de poly(oxyde d'éthylène) comme partie de la molécule de copolymère à blocs entière étant dans la plage de 20 à 50 %.

2. Composition de microémulsion selon la revendication 1,
le poids moléculaire moyen du bloc de poly(oxyde de propylène) de la molécule de copolymère à blocs étant dans la plage de 1 700 à 2 800 grammes/mole, et le pourcentage en poids du bloc de poly(oxyde d'éthylène) comme partie de la molécule de copolymère à blocs entière étant dans la plage de 30 à 45 %.

3. Composition de microémulsion selon la revendication 1,
le poids moléculaire moyen du bloc de poly(oxyde de propylène) de la molécule de copolymère à blocs étant dans la plage de 2000 à 2 800 grammes/mole, et le pourcentage en poids du bloc de poly(oxyde d'éthylène) comme partie de la molécule de copolymère à blocs entière étant dans la plage de 35 à 45 %.

4. Composition de microémulsion selon l'une quelconque des revendications 1 à 3,
la concentration du copolymère à blocs de poly(oxyde d'éthylène)-poly(oxyde de propylène)-poly(oxyde d'éthylène) dans la composition d'émulsion étant comprise entre 50 et 125 grammes/litre.

5. Composition de microémulsion selon la revendication 4,
la concentration du copolymère à blocs de poly(oxyde d'éthylène)-poly(oxyde de propylène)-poly(oxyde d'éthylène) étant comprise entre 75 et 100 grammes/litre.

6. Composition de microémulsion selon l'une quelconque des revendications 1 à 5,
la concentration de trinéxapac-éthyle étant comprise entre 200 et 400 grammes/litre.

7. Composition de microémulsion selon la revendication 6,
la concentration de trinéxapac-éthyle étant comprise entre 225 et 300 grammes/litre.

8. Composition de microémulsion selon l'une quelconque des revendications 1 à 7, la composition comprenant en outre des tensioactifs sélectionnés parmi des alcoxylates d'huile de ricin.

9. Composition de microémulsion selon l'une quelconque des revendications 1 à 8, la composition comprenant en outre 400 à 600 grammes/litre d'un solvant miscible à l'eau.

10. Composition de microémulsion selon la revendication 9, le solvant miscible à l'eau étant sélectionné parmi un alcool amylique, ou un mélange correspondant.

11. Procédé de régulation de la croissance de végétaux qui comprend une application sur un végétal d'une composition selon l'une quelconque des revendications 1 à 10.

12. Procédé selon la revendication 11, le végétal étant choisi parmi des céréales.

13. Procédé selon la revendication 11, le végétal étant le blé ou l'orge.
